# DEMANDE DE BREVET EUROPEEN

(11) **EP 2 455 879 A1**
(43) Date de publication de la demande: **23.05.2012**
(21) Numéro de dépôt: 10306274.1
(22) Date de dépôt: 18.11.2010
(51) Int. Cl.: G06F 21/00

(54) **Procédé de ré-allocation maitrisé de la mémoire d'un dispositif, et programme informatique associé**

(71) Demandeur: Gemalto SA, 92190 Meudon (FR)
(72) Inventeur: Girard, Pierre, 13112, La Destrousse (FR); Gauteron, Laurent, 13700, Marignane (FR)

(57) **Abrégé**

Procédé de sécurisation d'un dispositif électronique, par réallocation de tout ou partie des informations contenues dans la mémoire de ce dispositif, selon une méthode déterministe. Cette réallocation se faisant sur commande depuis un second dispositif.

L'invention décrit également un programme informatique permettant de réaliser cette réallocation.

## Description

L'invention concerne un procédé de sécurisation d'un code informatique enregistré dans un dispositif électronique communiquant.

L'invention porte en particulier sur un déplacement maitrisé de l'emplacement en mémoire d'un code informatique.

Les dispositifs électroniques communicants sont de plus en plus présents dans notre société, notamment au travers des téléphones portables, des agendas électroniques ou des cartes à puces. Les évolutions techniques de ces dispositifs ont permis de leur associer de plus en plus de programmes informatiques et de données.

Aujourd'hui de tels dispositifs peuvent contenir de nombreux programmes indépendants les uns des autres. Parfois il est même possible à l'utilisateur d'ajouter lui même de nouveaux programmes.

Cette situation a engendrée de nouveaux risques en termes de sécurité. En effet les programmes hébergés par un tel dispositif électronique sont généralement enregistrés dans un composant mémoire commun. Ce composant mémoire peut indifféremment être une mémoire non volatile ou volatile. Cette promiscuité en mémoire permet à un utilisateur mal intentionné de tenter d'accéder à des informations qui ne le concernent pas.

Ces attaques peuvent se faire en lecture ou en écriture.

Pour une attaque en écriture, un programme peut écrire dans la mémoire dans une zone qui contient déjà des données liées à un autre programme dit programme cible, et ainsi soit modifier ces données, soit les détruire. Une telle attaque peut permettre donc d'altérer le fonctionnement du programme cible (attaque par déni de service), ou de le faire fonctionner avec des données modifiées (attaque d'intégrité).

Ces attaques sont généralement effectuées en utilisant un changement de type ou de taille, d'une variable. En effet si une zone mémoire est prévue pour recevoir une variable de taille X, et qu'il y est inscrit une variable de taille 2X, les informations inscrites dans la mémoire à la suite de cet emplacement peuvent se trouver écrasées.

Les attaques en lecture ont pour but de lire une zone mémoire non accessible dans un fonctionnement nominal du dispositif. Les zones mémoires qui vont être les plus recherchées par les attaquants sont celles qui contiennent des secrets, par exemple des clés de chiffrement. A l'instar des attaques en écriture, les attaques en lecture peuvent par exemple se faire en lisant un espace mémoire de taille 2X alors que la donnée réellement à lire a une taille de X.

Les programmes permettant de telles actions peuvent avoir été développés à ces fins, ou exploitent des failles de programmations dans les programmes cibles.

De telles attaques sont d'autant plus graves que les dispositifs électroniques communiquant ont généralement une allocation mémoire commune. En effet les techniques actuelles de personnalisation des dispositifs sont basées sur l'implantation d'une image de la mémoire, commune pour tous les dispositifs. Ainsi si une faille est découverte sur un dispositif, elle est généralement transposable sur tout ou partie des dispositifs similaires en circulation. Cela est particulièrement dangereux pour des dispositifs à grande diffusion comme des cartes de déchiffrement de télévision payante.

Pour essayer de se protéger de ces attaques, seules deux solutions existent :
- Le verrouillage des dispositifs électroniques. Cette solution radicale est basée sur l'impossibilité d'ajouter des programmes dans le dispositif. Cette solution a longtemps été préconisée sur les cartes à puce ou les téléphones portables. L'évolution des capacités des dispositifs, et les exigences, de la part des utilisateurs, de liberté et d'ouverture de leurs dispositifs, rendent cette solution obsolète. De plus, cette solution ne permet pas de se prémunir de faiblesses présentes dans le programme lui même, et dont l'exploitation se ferait par une utilisation particulière de ce programme.
- La deuxième solution consiste en une reprogrammation des dispositifs. Cette solution impose, dès la connaissance d'une telle attaque, un retour ou un remplacement de tous les dispositifs ayant une image mémoire identique à celle attaquée.

La présente invention permet de résoudre ces problèmes en proposant un procédé de réallocation commandé de la mémoire de tout ou partie des éléments logiciels qu'elle contient, mais également un programme d'ordinateur permettant de déclencher et de contrôler cette réallocation.

Plus précisément, l'invention décrit, dans un premier temps un procédé de sécurisation du code informatique contenu dans la mémoire d'un premier dispositif électronique, possédant au moins une première zone mémoire contenant ledit code informatique, un programme informatique dit de réallocation, un système d'exploitation, un micro-processeur, et au moins un moyen de recevoir des informations depuis un second dispositif distant, ce procédé mis en oeuvre dans le premier dispositif, comportant au moins les étapes de :
- Réception, depuis le second dispositif d'une commande dite de « réallocation » contenant notamment des moyens pour identifier au moins une première zone mémoire dite « origine », ainsi que des moyens pour identifier au moins une seconde zone mémoire dite « cible »
- Interprétation, par le programme de réallocation et tout ou partie du système d'exploitation, de la commande de réallocation
- Copie des informations contenues dans la zone origine, vers la zone cible
- Remplacement, dans le code informatique, des références pointant vers la zone origine, par des références pointant vers la zone cible.

Le procédé peut comporter en outre une étape d'effacement des informations contenues dans la zone origine, après l'opération de copie.

Dans un deuxième temps, l'invention décrit un programme d'ordinateur configuré de manière à recevoir une structure de données contenant au moins :
- une information permettant d'identifier une adresse mémoire dite adresse d'origine,
- une information permettant de définir une taille T de donnée à déplacer,
- une information permettant d'identifier une adresse mémoire dite adresse cible,
ce programme possédant les moyens pour:
- lire les T informations se trouvant à l'adresse d'origine,
- écrire les informations à l'adresse cible.

Ce programme informatique peut comporter en outre des moyens pour identifier au moins une adresse mémoire dite référence, et inscrire l'adresse cible à l'adresse référence.

Ce programme informatique peut comporter en outre des moyens pour effacer les T informations situées à l'adresse d'origine.

D'autres caractéristiques et avantages de l'invention ressortiront clairement de la description qui en est faite ci-après, à titre indicatif et nullement limitatif, en référence aux dessins annexés dans lesquels :
- La figure 1 représente l'organisation de la mémoire d'un dispositif selon l'art antérieur
- La figure 2 représente une attaque sur la mémoire d'un dispositif selon l'art antérieur
- La figure 3 représente une réorganisation selon l'invention, de la mémoire illustrée dans la figure 1.
- La figure 4 représente une tentative d'attaque sur la mémoire d'un dispositif après application de l'invention

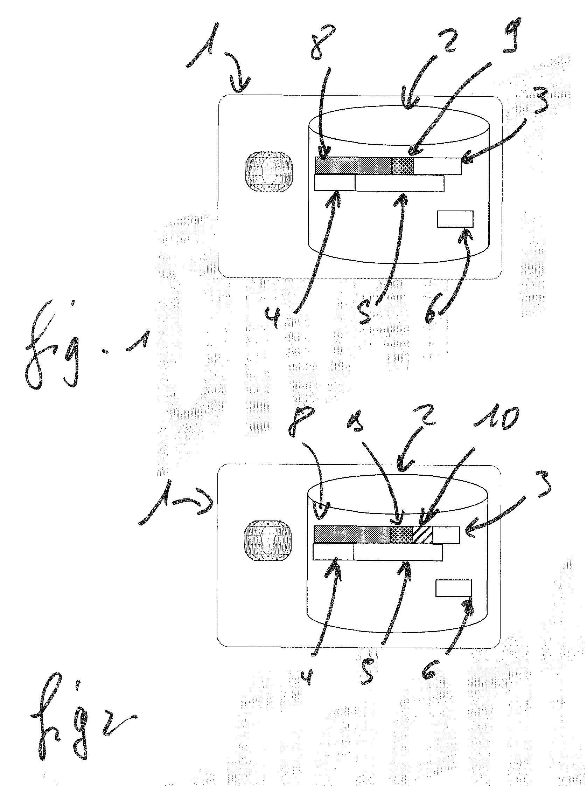

La figure 1 illustre un dispositif électronique 1, représenté par une carte à puce. Dans ce dispositif la mémoire 2, est représentée avec un ensemble de données 3, 4, 5, 6, 8, 9. Ces données peuvent indifféremment être des composants logiciels ou bien des informations statiques.

La mémoire 2 du dispositif 1 a été personnalisée selon la méthode courante de « plaquage ». Selon cette méthode, avant la production en masse des dispositifs 1, un premier dispositif, dit « starter », a été personnalisé. Les composants logiciels initiaux, ainsi que les données nécessaires, ont été installés sur ce dispositif starter. Une fois cette configuration faite, la mémoire de ce dispositif starter est recopiée pour former un « master ». Ensuite, ce master est copié dans tous les dispositifs 1 à produire. Le schéma mémoire de l'ensemble des dispositifs 1 de la série est donc identique. Dans l'exemple de la figure 1, les données composant le master sont les éléments 3, 4, 5 et 6.

Dans l'exemple illustré dans la figure 1, les composants 8 et 9 représentent un programme 8, et une données associée 9, qui ont été enregistrés dans le dispositif 1, par l'utilisateur lui même.

Dans le cas où la faiblesse réside dans le programme en lui même, les composants 8 et 9 représentent la fonctionnalité particulière dudit programme permettant de générer l'attaque.

Ce programme 8, dans un fonctionnement nominal, est capable de lire ou d'écrire la donnée 9. Toutefois, ce programme comporte une faiblesse qui permet de faire varier la taille des données lues ou écrites. Ainsi dans cet exemple la donnée 9 à une taille de 2 octets (soit 16 bits).

La figure 2 représente le même dispositif 1 qu'illustré dans la figure 1, avec les mêmes données en mémoire. Dans cette figure, on peut voir l'exploitation 10 de la faiblesse du programme 8. En effet, dans le cas d'une lecture, le programme 8 demande à lire la donnée 9, ce qui est son usage normal, mais il défini la taille de cette donnée comme étant 4 octets (soit 32 bits). Comme la donnée 9 n'a qu'une taille de 2 octets, l'opération de lecture va déborder en mémoire, et lire les 2 octets qui suivent la donnée 9. Dans l'exemple illustré dans la figure 2, ce dépassement a pour conséquence la lecture non autorisée des 2 premiers octets de la donnée 3.

En exploitant un tel mécanisme, l'utilisateur mal intentionné du programme 8 a ainsi peut accéder à une partie de la donnée 3 sans en avoir les droits. Cette opération devient particulièrement critique dans le cas ou la donnée 3 contient des données considérées comme sensibles, par exemple un secret.

Nous noterons que l'attaque, décrite ci-avant au moyen d'une opération de lecture, peut se dérouler de manière identique selon une opération d'écriture, voire une combinaison des deux.

Une fois une telle attaque menée à bien, celle-ci est transposable à tous les dispositifs ayant une allocation de la mémoire identique à celle du dispositif 1.

Il est alors aisé de diffuser à grande échelle le programme 8 et sa donnée associée 9, et ainsi de répéter l'attaque. Dans le cas d'une faiblesse du programme lui même, c'est l'usage particulier de la fonctionnalité 8-9 qui peut ainsi être diffusée.

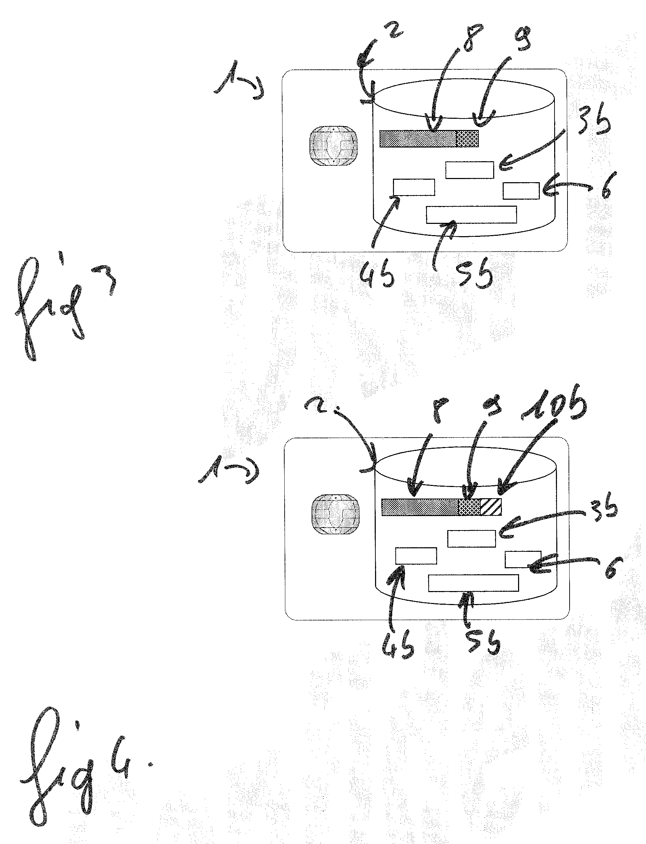

Selon l'invention, une fois une telle attaque connue, il est possible a l'organisme émetteur des dispositifs 1, de planifier une réorganisation de la mémoire de ses dispositifs afin que aucune donnée sensible ne se trouve dans la zone potentiellement attaquable par le programme 8. Cette opération, dite « re-mapping » consiste en un déplacement de tout ou partie des données sensibles dans une autre zone de la mémoire. Dans l'exemple illustré par la figure 3, les données initiales 3, 4 et 5 sont considérées comme devant être déplacées, la donnée 6 ne nécessitant pas un tel traitement.

L'organisme émetteur prépare donc une structure de données appelée NMap, qui comporte au moins :
- L'identification des données à déplacer, avec leur taille et leur emplacement initial en mémoire
- Le nouvel emplacement de chacune de données à déplacer.

La structure de données NMap peut également contenir la localisation des données « pointant » sur les données à modifier, et leurs nouvelles valeurs.

Cette information permet l'identification de toutes les données présente sur le dispositif, et contenant une référence vers les données à déplacer. Ces références sont généralement faites sous forme d'adresses mémoires, et permettent d'accéder à ces données. Dans le cas d'une donnée statique, tous les programmes susceptibles d'utiliser cette donnée doivent posséder une référence vers elle, dans le cas d'un programme, tout programme pouvant être amené à collaborer avec un tel programme doit posséder une référence vers celui-ci.

La mise à jour des références permet à tous ces liens de perdurer après le déplacement des données. Selon l'invention, cette information peut ne pas être intégrée dans NMap. Dans ce cas, c'est le programme de réallocation, en collaboration avec des fonctionnalités du système d'exploitation, qui procède à l'identification des références à mettre à jour, et à leur mise à jour effective.

Une fois la structure NMap créée, elle est transmise au dispositif.

D'une manière préférée, les informations contenues dans NMap sont concentrées dans une ou plusieurs graines.

Nous utilisons le terme de graine pour designer une valeur, qui, insérée dans un algorithme déterministe, permet de produire un résultat déterministe. Ainsi, lors de la préparation de la réallocation, il est possible d'utiliser un programme de réallocation qui, en fonction d'une valeur en entrée, génère un déplacement de tout ou partie des données en mémoire. Si une telle réallocation remplie les caractéristiques attendues (déplacement des composants 3, 4 et 5), alors une telle valeur est considérée comme une graine valide. Elle peut être transmise aux dispositifs qui doivent subir ladite réallocation. Dans ce cas, le programme de réallocation selon l'invention, présent dans les dispositifs, contient ledit algorithme déterministe. L'utilisation de la graine transmise selon ledit algorithme, permet d'identifier les zones mémoires à déplacer, et les zones cibles où elles doivent être déplacées. Selon ce mode de réalisation, une telle graine contient l'identification des données à déplacer (taille et emplacement initial) et les zones cibles.

Il est possible d'utiliser un mécanisme similaire en rattachant à chaque information contenue dans NMap une graine indépendante. Dans ce cas, l'utilisation de chacune de ces graines au travers de un ou plusieurs algorithmes déterministes, permet de régénérer chacune des informations nécessaires à la réallocation.

Cette transmission peut se faire par tout moyen de communication dont ledit dispositif dispose. Par exemple, si le dispositif est un téléphone portable, toute connexion « data » peut permettre une telle transmission. Si le dispositif est une carte à puce à contact, cette transmission peut se faire au travers d'un lecteur lors de son insertion.

La structure NMap est reçue et reconnue par le système d'exploitation présent sur le dispositif mobile. Un programme informatique, appelé « ré-allocateur » traite cette structure.

Ce traitement peut comporter avantageusement les étapes suivantes :
- Fermeture de l'ensemble des applications ou processus en cours d'exécution. Cette étape, quoiqu' optionnelle, permet de limiter les disfonctionnement potentiels lies à la réallocation.
- Lecture des données contenues dans les zones mémoires à déplacer
- Ecritures des données lues dans les zones mémoires cibles
- Modifications des références.

Si, dans le cas d'une attaque en écriture ces étapes sont suffisantes, il est préférable de leur associer une étape d'effacement au cours de laquelle le « re-allocateur » détruit les données présentes dans les zones mémoires à déplacer, une fois le déplacement effectif. Cette destruction peut se faire par l'écriture de données aléatoires, en lieu et place des données initiales.

Dans un mode préféré d'implémentation de l'invention, ces étapes sont suivies par un redémarrage du dispositif afin de s'assurer que les nouvelles références sont bien prises en compte.

La figure 3 représente le dispositif 1 après que les zones mémoire 3, 4 et 5 aient été déplacées respectivement dans les zones 3b, 4b et 5b.

Dans la figure 4, on voit que si le programme 8 essaie de réitérer son attaque, la zone mémoire 10b à laquelle il a potentiellement accès ne contient plus d'information sensible.

## Revendications

1. Procédé de sécurisation du code informatique contenu dans la mémoire (2) d'un premier dispositif électronique (1), possédant au moins une première zone mémoire (3, 4, 5, 6) contenant ledit code informatique, un programme informatique dit de réallocation, un système d'exploitation, un micro-processeur, et au moins un moyen de recevoir des informations depuis un second dispositif distant, **caractérisé en ce que** ce procédé, mis en oeuvre dans ledit premier dispositif électronique, comporte au moins les étapes de :
- Réception, depuis ledit second dispositif d'une commande dite de « réallocation » contenant notamment des moyens pour identifier au moins une première zone mémoire (3, 4, 5) dite « origine », ainsi que des moyens pour identifier au moins une seconde zone mémoire (3b, 4b, 5b) dite « cible »
- Interprétation, par ledit programme de réallocation et tout ou partie dudit système d'exploitation, de ladite commande de réallocation
- Copie des informations contenues dans ladite zone origine (3, 4, 5), vers ladite zone cible (3b, 4b, 5b),
- Remplacement, dans ledit code informatique, des références pointant vers ladite zone origine, par des références pointant vers ladite zone cible.

2. Procédé selon la revendication 1, **caractérisé en ce qu'**il comporte en outre une étape d'effacement des informations contenues dans ladite zone origine, après ladite opération de copie.

3. Programme d'ordinateur **caractérisé en ce qu'**il est configuré de manière à recevoir une structure de données contenant au moins :
- une information permettant d'identifier une adresse mémoire dite adresse d'origine,
- une information permettant de définir une taille T de donnée à déplacer,
- une information permettant d'identifier une adresse mémoire dite adresse cible
ledit programme possédant les moyens pour:
- lire les T informations se trouvant à ladite adresse d'origine
- écrire lesdites informations à ladite adresse cible.

4. Programme informatique selon la revendication précédente, **caractérisé en ce qu'**il comporte en outre des moyens pour identifier au moins une adresse mémoire dite référence, et inscrire ladite adresse cible à l'adresse référence.

5. Programme informatique selon l'une des revendications 3 ou 4, **caractérisé en ce qu'**il comporte en outre des moyens pour effacer lesdites T informations situées à ladite adresse d'origine.
